# EUROPEAN PATENT SPECIFICATION

(11) **EP 3 495 684 B1**
(45) Date of publication and mention of the grant of the patent: **25.03.2020**
(21) Application number: 17205475.1
(22) Date of filing: 05.12.2017
(51) Int. Cl.: F16D 65/12

(54) **BRAKE DISK FOR A DISK BRAKE DEVICE OF A MOTOR-VEHICLE**
BREMSSCHEIBE FÜR EINE SCHEIBENBREMSVORRICHTUNG EINES KRAFTFAHRZEUGS
DISQUE DE FREIN DESTINÉ À UN DISPOSITIF DE FREIN À DISQUE D'UN VÉHICULE AUTOMOBILE

(43) Date of publication of application: 12.06.2019
(73) Proprietor: FCA Italy S.p.A., 10135 Torino (IT)
(72) Inventor: RIZZINI, Mr. Nicola, I-10135 Torino (IT)
(74) Representative: Notaro, Giancarlo

(56) References cited:
- EP-A1- 2 208 908
- DE-A1-102008 016 037
- US-A1- 2006 086 579

## Description

### Field of the invention

The present invention relates to brake discs for disc brake devices for motor-vehicles, of the type having a disc body comprising a central hub and a wall surrounding the central hub and having an outer circumferential portion with two opposite faces that define annular crown surfaces acting as braking surfaces, for engagement by a brake caliper of a disc brake device.

### Prior art

Brake discs of conventional type are generally either discs with a solid wall, or so-called ventilated discs, having the outer circumferential portion of the disc formed with ventilation inner cavities communicating with a plurality of holes formed on the braking surfaces of the disc.

Ventilated discs are obtained by casting using a relatively complex and expensive method, since it is necessary to use a casting mould comprising two shells and at least one inner core, to define the inner cavities of the disc.

A brake disc according to the preamble of claim 1 is known from EP 2 208 908 A1. Similar solutions are known from DE 10 2008 016037 A1 and US 2006/086579 A1.

### Object of the invention

The object of the present invention is to produce a ventilated-type brake disc that is simple and inexpensive to manufacture.

A further object of the invention is to produce a ventilated-type brake disc that is able to provide a high ventilation efficiency.

### Summary of the invention

In order to achieve these objects, the invention is directed to a brake disc for a disc brake device, having the features of claim 1.

Thanks to the aforesaid arrangement, the outermost circumferential portion of the disc, defining the two braking surfaces, is a solid-wall portion, without the need, therefore, to provide inner ventilation cavities that require the use of a complex casting mould.

In a preferred embodiment, the radial blades, formed in one piece with said intermediate circumferential portion of the disc, each have a radially inner end and a radially outer end, the two ends having orientations that are rotated relative to one another about a median radial axis of the blade, in such a way that each blade has a warped configuration.

### Detailed description of the invention

Further characteristics and advantages of the invention will become apparent from the description that follows with reference to the attached drawings, provided purely by way of non-limiting example, wherein:
- Figure 1 is a perspective view of a conventional solid-wall brake disc,
- Figure 2 is a partially-sectioned front view of a conventional ventilated-type disc,
- Figures 3 and 4 are two perspective views of a preferred embodiment of a brake disc according to the invention,
- Figure 5 is a front view of the brake disc of Figures 3 and 4, and
- Figure 6 is an additional partially-sectioned perspective view of the brake disc of Figures 3-5.

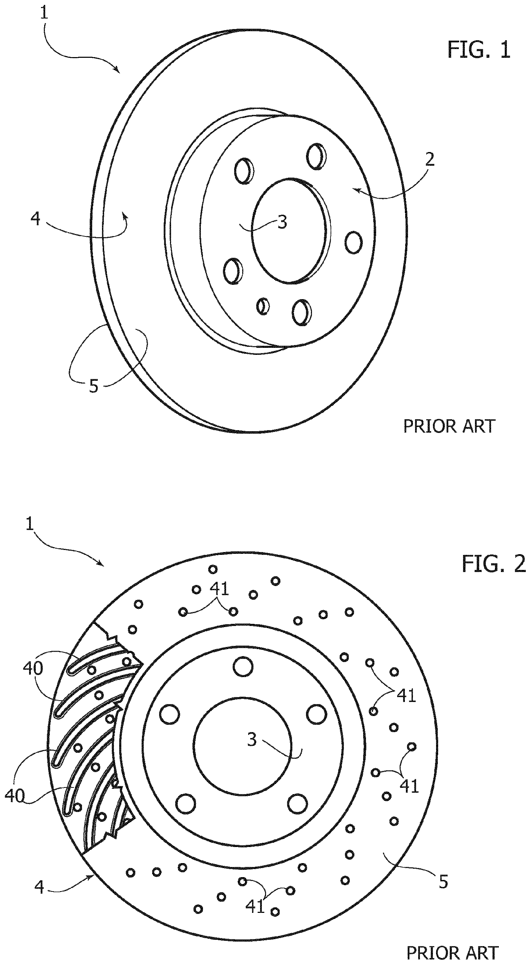

Figure 1 shows a conventional-type brake disc 1, including a disc body 2, which comprises a hub 3 surrounded by a wall 4. The wall 4 is a solid wall and defines, with its two opposite faces, two annular crown surfaces 5 constituting the braking surfaces of the disc.

Figure 2 shows a front view of a conventional ventilated-type brake disc. In Figure 2, the parts common to those of Figures 1 are indicated by the same reference numbers. In the case of the solution of Figure 2, the wall 4 surrounding the hub 3 is a hollow wall, defining a plurality of internal wings 40 configured and arranged so as to define a ventilation rotor. The cavities comprised between the wings 40, formed inside the wall 4, open outwards through a plurality of holes 41, formed on the two opposite faces 5 of the disc defining the braking surfaces.

As already indicated above, the configuration of the ventilated disc illustrated in Figure 2 requires a relatively complex casting manufacturing method, which involves the provision of a composite mould structure, including two main shells and one or more cores defining the inner cavities of the disc.

In order to overcome the aforesaid drawback, the invention provides a brake disc in which the wall surrounding the hub of the disc includes an intermediate circumferential portion, radially interposed between the hub and the outermost circumferential portion defining the disc braking surfaces.

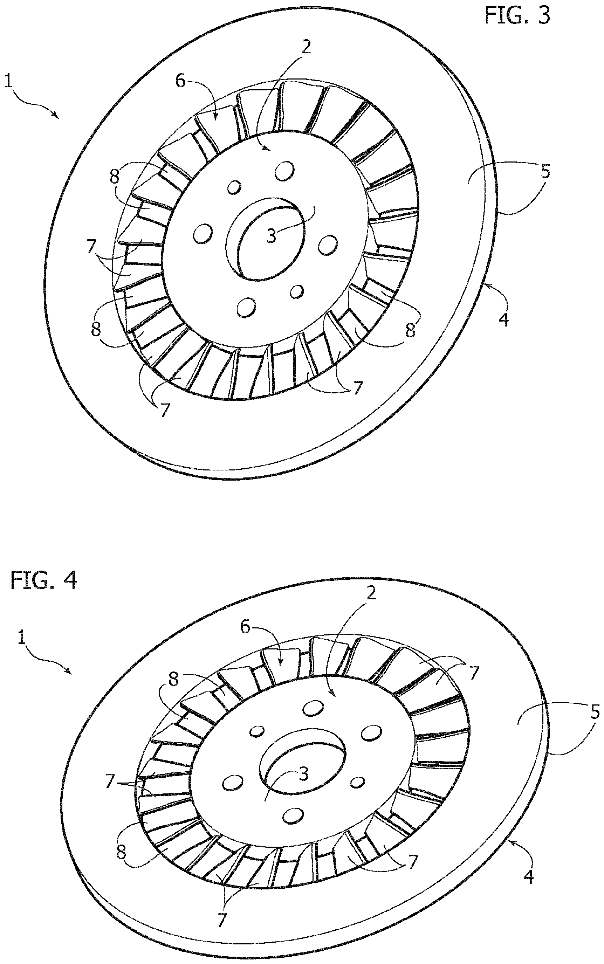

In Figures 3-6, the parts common to those of Figures 1 and 2 are indicated by the same reference numbers.

The main difference with respect to the known solutions of Figures 1 and 2 lies in that in this case the wall 4 of the disc surrounding the hub 3 includes an intermediate circumferential portion 6 that is radially interposed between the hub 3 and the outer circumferential portion whose faces define the braking surfaces 5 of the disc. At the intermediate circumferential portion 6, a plurality of radial blades 7 are formed by casting, which in operation, during rotation of the disc, fulfil the function of a disc ventilating rotor. As can be seen in the drawings, through-openings 8 are formed between the blades 7 for passage of air.

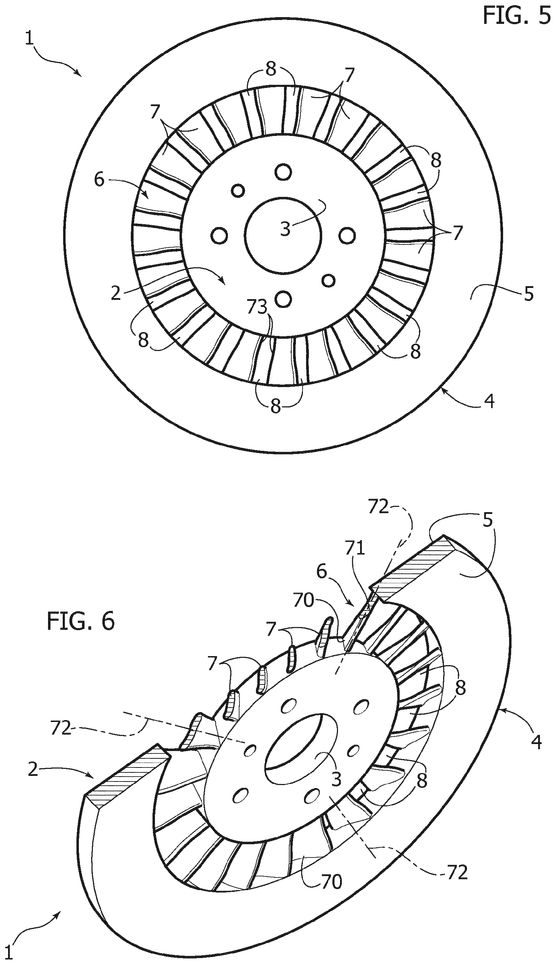

With reference to, for example, Figure 6, each blade 7 has an inner end 70 protruding from the hub 3, and an outer end 71 protruding from the inner edge of the outer circumferential portion 4. As can be seen in particular in Figure 6, the two ends 70, 71 of each blade have orientations rotated relative to one another about a radial median axis 72 of the blade, in such a way that the blades have a warped configuration in order to give rise to a flow of air during rotation of the disc.

With reference to Figure 5, in a plan view of the brake disc 1, two adjacent blades 7 have their side edges 73 facing the same through-opening 8, which are spaced apart circumferentially from each other, which means that, in this front view, two adjacent blades do not appear to be partially overlapped with each other. Thanks to this configuration, obtaining the brake disc according to the invention by casting is particularly simple and inexpensive.

In the method for forming the above-described brake disc, a casting mould structure is provided for obtaining the brake disc in a single cast piece. The mould structure includes only two shells defining the casting cavity, without the need to provide one or more cores inside the mould in order to form the radial blades 7 and the through-openings 8 alternated with the blades.

It should be noted that, all other conditions being equal, the brake disc according to the invention has a larger diameter than a corresponding brake disc according to the prior art, since, on the one hand it is necessary that the braking surface 5, which is formed on each face of the disc, has the required radial extension and, on the other hand, it is necessary to take into account the radial extension of the intermediate circumferential portion 6, in which the blades 7 and the openings 8 are formed. This greater diameter, however, is not an obstacle, given the current trend, even in small motor-vehicles, to use wheels with a larger diameter and also brake discs with a larger diameter.

Naturally, without prejudice to the principle of the invention, the details of construction and the embodiments may vary widely with respect to those described and illustrated purely by way of example, without departing from the scope of the present invention.

## Claims

1. A brake disc for a disc brake device, having a disc body (2) comprising a central hub (3) and a wall surrounding the central hub (3),
wherein the wall surrounding the central hub (3) includes:
- an outer circumferential portion with two opposite faces defining two annular crown surfaces (5) constituting the braking surfaces of the disc, and - an intermediate circumferential portion (6), radially interposed between the hub (3) and the outer circumferential portion defining the braking surfaces (5),
wherein at said intermediate circumferential portion (6), a plurality of radial blades (7) are formed in one piece with the brake disc, and a plurality of disc ventilating through-openings (8) are formed alternated with the radial blades (7),
said brake disc being **characterized in that** said outer circumferential portion is a solid-wall portion, said through-openings (8) alternated with the radial blades (7) extending only through said intermediate circumferential portion (6), and
**in that**, in a front view of the disc, the side edges of two adjacent blades (7) that face the same through-opening (8) are spaced apart from each other in the circumferential direction, so that two radial blades (7) adjacent to each other do not appear to be partially overlapped with each other.

2. A brake disc according to claim 1, **characterized in that** each of said radial blades (7) has a radially inner end (70), and a radially outer end (71), which ends have orientations rotated relative to each other about a median radial axis (72) of the blade (7), in such a way that the blade has a warped configuration.

3. A method for forming a brake disc according to claim 1, **characterized in that** it makes use of a casting mould structure for obtaining said brake disc in a single cast piece, said structure including only two shells defining the casting cavity, without the need to arrange cores within the mould structure in order to form the aforesaid radial blades (7) and the aforesaid through-openings (8) alternated between the blades.

## Patentansprüche

1. Bremsscheibe für eine Scheibenbremsvorrichtung mit einem Scheibenkörper (2), der eine zentrale Nabe (3) und eine die zentrale Nabe (3) umgebende Wand aufweist, wobei die die zentrale Nabe (3) umgebende Wand umfasst:
- einen Außenumfangsabschnitt mit zwei gegenüberliegenden Flächen, die zwei ringförmige Kronenflächen (5) definieren, die die Bremsflächen der Scheibe bilden, und
- einen Zwischenumfangsabschnitt (6), der radial zwischen der Nabe (3) und dem Außenumfangsabschnitt angeordnet ist, der die Bremsflächen (5) definiert,
wobei an dem Zwischenumfangsabschnitt (6) mehrere radiale Schaufeln (7) einstückig mit der Bremsscheibe ausgebildet sind und mehrere scheibenbelüftende Durchgangsöffnungen (8) abwechselnd mit den radialen Schaufeln (7) ausgebildet sind,
wobei die Bremsscheibe **dadurch gekennzeichnet ist, dass** der Außenumfangsabschnitt ein Vollwandabschnitt ist, wobei sich die Durchgangsöffnungen (8) mit den radialen Schaufeln (7) abwechseln, die sich nur durch den Zwischenumfangsabschnitt (6) erstrecken, und
dass in einer Vorderansicht der Scheibe die Seitenkanten zweier benachbarter Schaufeln (7), die derselben Durchgangsöffnung (8) zugewandt sind, in Umfangsrichtung voneinander beabstandet sind, so dass sich zwei radiale Schaufeln (7) nebeneinander anscheinend nicht teilweise zu überlappen.

2. Bremsscheibe nach Anspruch 1, **dadurch gekennzeichnet, dass** jede der radialen Schaufeln (7) ein radial inneres Ende (70) und ein radial äußeres Ende (71) aufweist, deren Enden gegeneinander verdrehte Orientierungen um eine radiale Mittelachse (72) der Schaufel (7) derart aufweisen, dass die Schaufel eine verwundene Konfiguration aufweist.

3. Verfahren zum Ausbilden einer Bremsscheibe nach Anspruch 1, **dadurch gekennzeichnet, dass** eine Gussformstruktur verwendet wird, um die Bremsscheibe in einem einzigen Gussstück zu erhalten, wobei die Struktur nur zwei Schalen umfasst, die den Gusshohlraum definieren, ohne dass die Kerne innerhalb der Formstruktur angeordnet werden müssen, um die vorgenannten radialen Schaufeln (7) und die vorgenannten Durchgangsöffnungen (8) abwechselnd zwischen den Schaufeln auszubilden.

## Revendications

1. Disque de frein pour un dispositif de frein à disque, ayant un corps de disque (2) comprenant un moyeu central (3) et une paroi entourant le moyeu central (3),
dans lequel la paroi entourant le moyeu central (3) comporte :
- une partie circonférentielle externe ayant deux faces opposées définissant deux surfaces de couronne annulaires (5) constituant les surfaces de freinage du disque et - une partie circonférentielle intermédiaire (6), interposée radialement entre le moyeu (3) et la partie circonférentielle externe définissant les surfaces de freinage (5),
dans lequel, au niveau de ladite partie circonférentielle intermédiaire (6), une pluralité de lames radiales (7) sont formées en une seule pièce avec le disque de frein, et une pluralité d'ouvertures traversantes de ventilation (8) de disque sont formées en alternance avec les lames radiales (7),
ledit disque de frein étant **caractérisé en ce que** ladite partie circonférentielle externe est une partie de paroi pleine, lesdites ouvertures traversantes (8) en alternance avec les lames radiales (7) s'étendant uniquement à travers ladite partie circonférentielle intermédiaire (6), et
**en ce que**, dans une vue de face du disque, les bords latéraux de deux lames adjacentes (7) qui font face à la même ouverture traversante (8) sont espacés l'un de l'autre dans la direction circonférentielle, de sorte que deux lames radiales (7) adjacentes l'une à l'autre ne semblent pas se chevaucher partiellement.

2. Disque de frein selon la revendication 1, **caractérisé en ce que** chacune desdites lames radiales (7) a une extrémité radialement interne (70) et une extrémité radialement externe (71), lesquelles extrémités ont des orientations tournées l'une par rapport à l'autre autour d'un axe radial médian (72) de la lame (7), de manière à ce que la lame ait une configuration déformée.

3. Procédé de formation d'un disque de frein selon la revendication 1, **caractérisé en ce qu'**il utilise une structure de moule de coulée pour obtenir ledit disque de frein en une seule pièce coulée, ladite structure comportant uniquement deux coques définissant la cavité de coulée, sans qu'il soit nécessaire d'agencer des noyaux dans la structure de moule afin de former les lames radiales (7) susmentionnées et les ouvertures traversantes (8) susmentionnées en alternance entre les lames.
